# EUROPEAN PATENT APPLICATION

(11) **EP 1 110 696 A2**
(43) Date of publication of application: **27.06.2001**
(21) Application number: 00310961.8
(22) Date of filing: 08.12.2000
(51) Int. Cl.: B29C 47/50, C08J 3/20

(54) **Continuous process to prepare silicone compositions**

(30) Priority: 21.12.1999 US 467718
(71) Applicant: GENERAL ELECTRIC COMPANY, Schenectady, NY 12345 (US)
(72) Inventor: Martucci, John Patrick, Ballston Lake, New York 12019 (US); Rocha-Galicia, Gerardo, Waterford, New york 12188 (US); Dong, Stephen, Clifton Park, New York 12065 (US); Mrozek, Alfons, 51381 Leverkusen (DE); Banevicius, John Peter, Clifton Park, New York 12065 (US)
(74) Representative: Szary, Anne Catherine, Dr.

(57) **Abstract**

High levels of fumed silica, processing fluid and high molecular weight silicone polymer are continuously compounded into a homogeneous silica filled heat-vulcanizable silicone composition by mixing filler and high viscosity silicone polymer continuously in a first co-rotating intermeshing double screw extruder (112) and continuously compounding the filler and silicone polymer mixture from the first extruder in a second extruder (114) comprising a single shaft reciprocating extruder.

## Description

The invention relates to a process for continuously preparing heat-vulcanizable silicone compositions.

A heat-vulcanizable silicone composition comprises a high viscosity silicone polymer, an inorganic reinforcing filler and various additives that aid processing or impart desired final properties to the composition. A vulcanizing agent can be added and the composition heat-cured to fabricate silicone rubber moldings such as gaskets, medical tubing and computer keypads.

Typically, a heat-vulcanizable silicone composition is produced by kneading a high-viscosity polydiorganosiloxane, the inorganic filler and additives by means of a batch kneading machine such as a high intensity Banbury mixer or a low intensity double arm dough mixer. In this process, polydiorganosiloxane, inorganic filler, treating agents and additives are batch mixed until desired properties are obtained. In Kasahara *et al*., U.S. Pat. 5,198,171, a premix of polydiorganosiloxane, inorganic filler and treating agents is formed by a high speed mechanical shearing mixer. The premix is further compounded in a same-direction double screw extruder.

A batch process requires long mixing times and large amounts of energy. Non-homogeneous shear and extensional stress across a commercial sized batch can result in non-uniform size distribution of filler that results in variations in properties. Batches processed at different times may be characterized by different physical properties. The batch process is labor, energy and capital intensive and produces materials of only marginal consistency.

In Wacker-Chemie European Patent 570 387, diorganopolysiloxane and silicon dioxide are mixed in a first single shaft kneader and degassed in a second single shaft kneader. In Hamada *et al*., U.S. Pat. 5,409,978, a premix of polydiorganosiloxane, inorganic filler and treating agents is formed at a temperature in the range of about 200°C to 300°C in a co-rotating continuous double screw extruder. The premix is then compounded and heat treated at 150°C to 300°C in a counter-rotating, double screw extruder.

These processes are deficient in throughput or in product dispersion. There is a need for a process with improved throughput that produces a well dispersed heat-vulcanizable silicone composition from filler, additive and polymer.

### SUMMARY OF THE INVENTION

The invention provides a process that continuously compounds high levels of filler, processing fluid and silicone polymer into homogeneous filled heat-vulcanizable silicone compositions with requisite reinforcing properties and levels of volatiles. The process does not require a premix. The process comprises mixing filler and high viscosity silicone polymer continuously in a first co-rotating intermeshing double screw extruder. The filler and silicone polymer mixture from the first extruder is then continuously compounded in a second extruder comprising a single shaft reciprocating extruder.

In another embodiment, a compounding system comprises a first co-rotating, intermeshing double screw extruder and a second single shaft reciprocating extruder.

### BRIEF DESCRIPTION OF THE DRAWINGS

FIG. 1 is a schematic representation of a continuous heat-vulcanizable silicone composition compounding process and apparatus; and

FIG. 2 is a schematic representation of another continuous compounding process and apparatus.

### DETAILED DESCRIPTION OF THE INVENTION

According to the invention, filled heat-vulcanizable silicone compositions are prepared in a combination of extruders. For example, filler and silicone polymer can be mixed in a first co-rotating, intermeshing extruder and then further processed in a second extruder of different processing characteristics. Dispersive and distributive mixing in the second extruder facilitates surface treatment of the filler. A high rate of interfacial area generation is provided in the second extruder to facilitate diffusion of volatile components through polymer-vapor interfaces and into the vapor space for elimination through equipment vacuum vents. Advantageously, the process does not require a premix feed and can be operated at improved throughput. The process can be operated at improved throughput without the need of a premix feed.

Examples of a second extruder include a reciprocating or non-reciprocating single screw extruder or another co-rotating, intermeshing extruder. For example, the first extruder can be a co-rotating, intermeshing extruder that mixes and densifies filler, silicone polymer and additives into a homogeneous material that contains a high level of fumed silica uniformly dispersed into a highly viscous elastomeric matrix with a high content of residual volatiles. A single screw reciprocating extruder can be located down-stream of the densifying extruder to complete filler treatment and compounding and to reduce the level of volatiles (moisture, unpolymerized monomer, solvents) contained in the predensified material to a required level.

The inorganic filler that can be used in the invention can be any inorganic filler used in blends with silicone polymers. Examples of inorganic fillers include a reinforcing silica such as fumed silica or precipitated silica or a silica that has been surface-treated with an organosilicon compound such as an organopolysiloxane, organoalkoxysilane, organochlorosilane or a hexaorganodisilazane. The filler can be diatomaceous earth, finely crushed quartz, aluminum oxide, titanium oxide, iron oxide, cerium oxide, cerium hydroxide, magnesium oxide, zinc oxide, calcium carbonate, zirconium silicate, carbon black or ultramarine. A single filler or a combination of fillers can be used to reinforce the silicone polymer.

The amount of the filler can be in the range of from about 5 to about 200 parts by weight, desirably from about 10 to about 100 parts by weight and preferably from about 20 to about 60 parts by weight, per 100 parts by weight of silicone polymer.

Residual silanol groups on the surface of a filler can govern strength of hydrogen bonds between the silica and hydroxyl or oxygen groups in the silicone polymer chain. High concentrations of residual silanols in a filler cause "structuring" or "crepe hardening" of the final product in storage. This effect leads to difficulties in the processing of the material after it has been stored for extended periods. If the concentration of silanol functional groups in a filler is too high, a treating agent can be added to reduce the groups to a required concentration. The silanol reactant treating agent can react to reduce available groups to a concentration of between about 8 to about 2 hydroxyl groups/(nanometer)² of filler, preferably between about 7 to about 3 hydroxyl groups/(nanometer)² of filler. The surface-treated silica is a preferred filler in the invention, in an amount from about 10 to about 100 parts by weight, preferably from about 20 to about 60 parts by weight, per 100 parts by weight of silicone polymer.

The treating agent can be mixed into the filler to reduce filler silanol groups, to improve dispensability of the filler and/or to reduce the time required for aging of the silicone rubber, to prevent creep hardening and/or to regulate plasticity. The treating agent can be an organosilane, organosilazane, a low-viscosity polysiloxane or a silicone resin, which has a silanol group and/or an alkoxy group having 1 to 6 carbon atoms. Examples include diphenyl-silanediol, dimethylsilanediol, methyltriethoxysilane and phenyltrimethoxysilane. The low-viscosity polysiloxane may contain one or more kinds of organic groups selected from a methyl group, a phenyl group, a vinyl group and a 3,3,3-trifluoropropyl group. The viscosity of the polysiloxane measured at 25°C is in the range of from about 1 to about 300 cP, preferably from about 5 to about 100 cP. The treating agent can be added in an amount of from 0.1 to 100 parts by weight, desirably from 0.5 to about 50 parts by weight and preferably from about 1.0 to about 20 parts by weight per 100 parts by weight of the filler. Preferred silanol-reactant treating agents include silanol-stopped polydimethylsiloxane, octamethylcyclotetrasiloxane (D4) and hexamethyldisilazane (HMDZ).

The silicone polymer used in the compositions of the present invention can be represented by recurring units of Formula I: 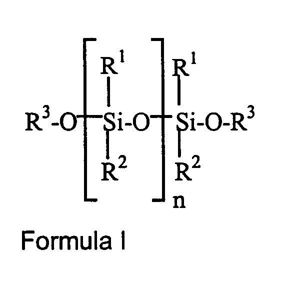 wherein, R¹ independently at each occurrence represents C₁₋₄ alkyl, or C₂₋₄ alkylene; R² independently at each occurrence represents C₁₋₄ alkyl, C₁-C₄ haloalkyl or C₂₋₄ alkylene; R³ independently at each occurrence represents H, C₁₋₁₀ alkyl, C₂₋₄ alkylene, C₄₋₆ cycloalkyl, OH or C₁-C₄ haloalkyl; and n represents an integer from 1,000 to 20,000.

A further preferred composition comprises a silicone polymer wherein, R¹ independently at each occurrence represents, CH₃ or CH=CH₂; R² independently at each occurrence represents, CH₃, CH=CH₂ or CH₂CH₂CF₃; R³ independently at each occurrence represents CH₃, CH=CH₂, OH or CH₂CH₂CF₃; and n represents an integer from about 4,000 to about 10,000.

Another embodiment provides a composition wherein the vinyl content of the silicone polymer ranges from about 0.05% to about 0.5 % by weight of the silicone polymer.

The heat-vulcanizable silicone composition can also include other additives such as heat-resistance improvers such as oxides, hydroxides and fatty acid salts of metals, vulcanization reverse inhibitors, flame retardants such as platinum compounds, discoloration preventive agents, plasticizers such as silicone oil, internal release agent such as metal soaps, pigments and dyes.

Features of the invention will become apparent from the following drawings and detailed discussion, which by way of example without limitation describe embodiments of the present invention.

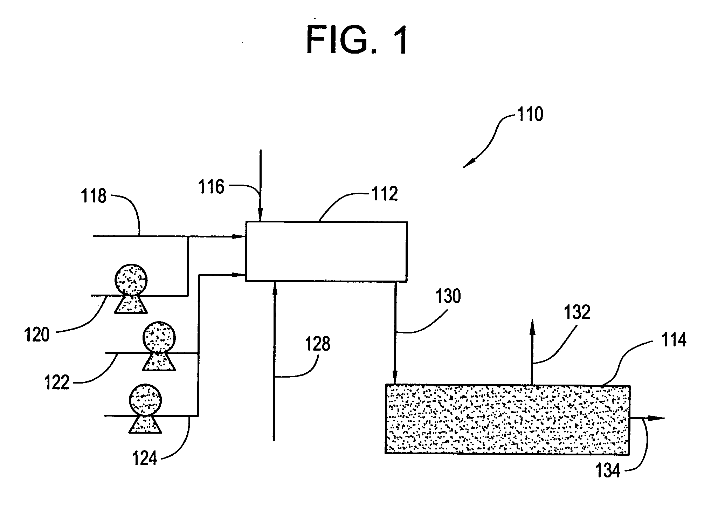

FIG. 1 is a schematic representation of a silicone composition compounding process according to the invention. In the FIG. 1 embodiment, either treated or untreated, raw fumed silica filler is mixed with a processing fluid that comprises HMDZ and water at a first location prior to addition of the silicone polymer. The amount of HMDZ can be in the range of from about 0.1 to about 100 parts by weight, desirably from about 0.5 to about 50 parts by weight and preferably from about 1.0 to about 20 parts by weight, per 100 parts by weight of the fumed silica. The amount of water can be in the range of from about 0.1 to about 100 parts by weight, desirably from about 0.5 to about 20 parts by weight and preferably from about 1 to about 10 parts by weight, per 100 parts by weight of the fumed silica.

In FIG. 1, a process and apparatus (system) for compounding filled silicone compositions is designated 110. The system 110 includes first extruder 112 and second extruder 114. The first extruder 112 is a double screw extruder of the co-rotating intermeshing type. Multiple extruders can be used as the first extruder 112 to compound filler, treating agent and silicone polymer. The resulting homogenous material can be fed to the second extruder 114, which is a single shaft extruder. The second extruder 114 is designed to operate at high temperatures and to provide the open surface areas necessary for devolatilization. The ratio of L/D of the first extruder to L/D of the second extruder can be about 0.37 to about 0.66 or preferably about 0.48 to about 0.52. The second extruder can be provided with a pressurized zone to retain volatiles. This section can be formed by isolating screw elements with melt rings or extended core elements situated at both the beginning and at the section end.

In the process of FIG. 1, filler 116, distilled water 118, HMDZ 120, silanol 122 and a vinyl oil 124 are continuously supplied from storage tanks into first extruder 112. Polymer 128 is added and the materials are continuously compounded and discharged as an extrudate 130. The extrudate 130 is continuously fed into second single shaft extruder 114 such as a Pilgrim extruder. Preferably, the filler and silicone polymer mixture is charged to the second extruder via a side feed. Second extruder 114 is provided with a vent for extrudate devolatilization 132. The vent can be a plurality of vents in applications that require more than one vent for effective devolatilization. After venting 132, a compounded and devolatilized filled silicone composition is discharged 134 at the end of the second extruder 114.

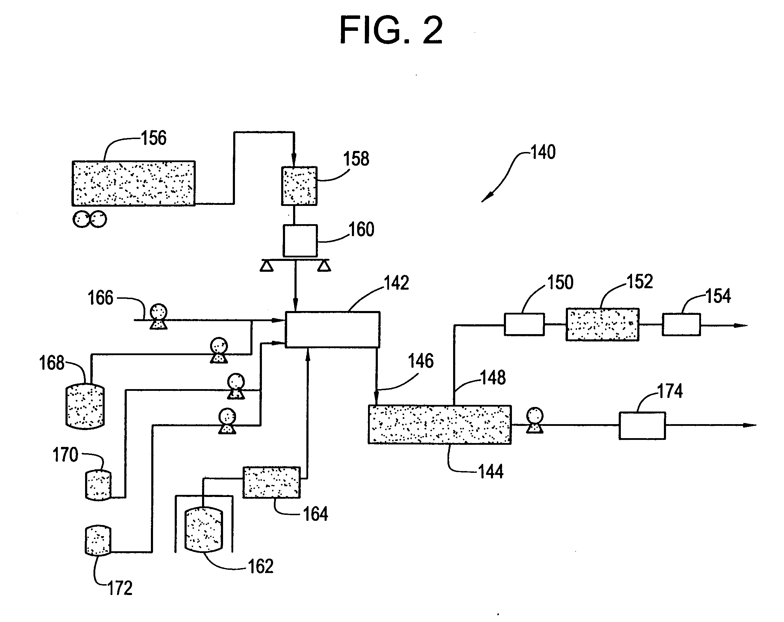

FIG. 2 shows another embodiment that includes a transition apparatus between extruders of the invention. In FIG. 2, the process and apparatus (system) is designated 140 and includes first extruder 142 and second extruder 144. The first extruder 142 used in the invention can be a double screw extruder of the co-rotating, intermeshing type. This extruder is especially suited for the process of this invention due to its capability to produce the conditions needed for the preparation of the filler for compounding with the silicone polymer. The extruder can have multiple addition ports for on-stream addition of the components of the compounded silicones. The extruder can operate at the high temperatures and can provide the open surface areas necessary for filler chemical treatment with treating agent. Finally, this extruder can provide the high pressurization necessary to pump the compounded product out of the extruder.

In an embodiment, the filler and polymer can be mixed in a first co-rotating, intermeshing extruder 142 and then further processed in another extruder 144 of different characteristics. Examples of a second extruder 144 include a reciprocating or non-reciprocating single screw extruder or another co-rotating, intermeshing extruder. For example, the first extruder 142 can be a co-rotating, intermeshing extruder that densifies processing fluid and filler into a homogeneous material that contains a high level of fumed silica uniformly dispersed into a highly viscous elastomeric matrix with a high content of residual volatiles. A single screw reciprocating extruder 144 can be located down-stream of the densifying extruder 142 to complete filler treatment and compounding and to reduce the level of volatiles (moisture, unpolymerized monomer, solvents) contained in the predensified material to a required level.

The combination of extruders can be designed for improved surface area renewal, feeding capability, residence time, dispersive and distributive mixing, devolatilization efficiency, temperature control or a combination of two or more of these effects. The second extruder 144 can be operated in-series with the first extruder. Compounded material can be force-fed from one extruder to the other by the use of pressure generated internally by the rotation of the screws. In FIG. 2, material from extruder 142 is conveyed by transition apparatus 146, which can be a single screw extruder such as a discharge extruder or a feeder crammer to control back pressure, surging and heat generation in extruder 142. The apparatus 146 can be a single screw extruder with an L/D ratio of about 3.5 and with double flights in a metering section to facilitate material discharge from extruder 142. The transition apparatus 146 can act as a buffer between the two extruders 142 and 144, to reduce flow variations (surging) from one extruder 142 to the next 144. The apparatus 146 can be adjusted to overcome unloading pressure from the first extruder. While FIG. 2 shows the transition apparatus 146 feeding product from extruder 142 to the top of extruder 144, the product from extruder 142 can be side fed to extruder 144 either directly or by means of the transition apparatus 146. Side feed reduces heat generation that may be occasioned by the 90° turn of a top feed.

The first co-rotating, intermeshing extruder 142 can provide a high mixing intensity to initially densify and compound filler and silicone. A combination of dispersive and distributive mixing in extruder 144 facilitates filler treatment by effectively exposing residual silanol groups on the surface of the filler to the action of treating agents. Also, a high rate of interfacial area generation is provided in the single screw reciprocating extruder 144 to facilitate diffusion of volatile components through polymer-vapor interfaces and into the vapor space for elimination through equipment vacuum vents 148. Vents 148 are illustrated as including a pre-condenser 150, vacuum pump 152 and after condenser 154 to reduce temperature of volatiles to about 30°C.

In the process illustrated in FIG. 2, raw, untreated fumed silica is charged from filler tank 156 to bin 158 and is metered into extruder 142 by means of filler feeder 160. Silicone polymer from storage 162 is heated 164 to a temperature of at least 15°C. Desirably, the polymer is heated 162 to a temperature between about 15°C and about 150°C and preferably between about 25°C and about 120°C. Heating the polymer advantageously reduces the heating of material in extruder 142. Further, heating reduces the viscosity of the polymer so that it can be controllably metered into the extruder 142. Accordingly, proper proportions of filler and additives can be determined for processing with the polymer and feeds of the filler and additives can be metered and controlled to assure proper mixing proportions of the composition components.

Prior to mixing with the heated polymer in extruder 142, a combination of distilled water 166 and HMDZ 168 is added to the filler, followed by the addition of silanol 170 and vinyls 172.

Temperature in the first extruder 142 is maintained between about 25°C and about 200°C, desirably between about 30°C and about 180°C and preferably between about 40°C and about 130°C. Product from first extruder 142 is charged by means of the transition apparatus 146 into second extruder 144 for compounding, treatment and stripping. Temperature in the second extruder can be controlled in a step-wise manner so that the temperature along the first 1 to 3 diameters of the extruder is maintained between about 50°C and about 200°C, desirably about 80°C and about 170°C and preferably between about 100°C and about 150°C. The temperature is raised after about the first 3 diameters of barrel length to about 100°C to about 200°C, desirably to about 120°C to about 190°C and preferably about 140°C to about 180°C.

Product is pumped from extruder 144 and is cooled 174 to about 70°C.

These and other features will become apparent from the following detailed discussion, which by way of example without limitation describes preferred embodiments of the present invention.

Example

The materials shown in Table 1 (run 1001) were charged into a 5" diameter Readco co-rotating intermeshing double screw extruder (L/D=7.2).

**Table 1**

| Material (parts by weight)/Run | 1001 | Batch | 1002 |
|---|---|---|---|
| | | | |
| Methylvinylsillcone polymer | 100 | 100 | 100 |
| | | | |
| Vinyl terminated polydimethylsiloxane (500cps) | | | 3 |
| Untreated, raw fumed silica | 60 | 60 | 60 |
| HMDZ | 3 | 0.5 | 0 |
| Deionized water | 1.5 | | 0 |
| Polydimethylsiloxane | 6.3 | 6.3 | 8 |
| Polydimethylmethylvinylsiloxane | 1.2 | 1.2 | 3 |

A densified and mixed product from the Readco was then charged into a BUSS LR-100 single shaft reciprocating extruder (L/D 19) where it was compounded, treated and stripped at a temperature of about 150°C. The Readco was operated at 290 RPM's and at a temperature of 81°C; the BUSS was operated at 250 RPM's and at temperatures from 100°C to 150°C. A vacuum of 29 inches Hg was imposed at the Buss vent for devolatilization. The product was cooled and evaluated with the results shown in Table 2.

A second run (1002) was conducted in the Readco and BUSS extruders to evaluate compounding without HMDZ *in situ* treatment of filler. The Readco was operated at 225 RPM's and at a temperature of 103°C; the BUSS was operated at 200 RPM's and at a temperature of 150°C. The materials charged are listed in Table 1 and properties of product are shown in Table 2.

A comparison preparation of the materials shown in Table 1 was conducted as a comparison. Product was evaluated with the results shown in Table 2.

**Table 2**

| Property/Run | 1001 | Batch | 1002 |
|---|---|---|---|
| | | | |
| Specific Gravity | 1.182 | 1.185 | 1.18 |
| Shore A Hardness | 60 | 58 | 69 |
| Tensile Strength (psi) | 1520 | 1470 | 1350 |
| Elongation (%) | 404 | 440 | 327 |
| Tear (ppi) | 21.8 | 22 | 105 |

This Example shows that the continuous process of the invention can provide filled heat-vulcanizable silicone compositions having properties comparable to those of compositions produced in a batch process.

While preferred embodiments of the invention have been described, the present invention is capable of variation and modification and therefore should not be limited to the precise details of the Examples. The invention includes changes and alterations that fall within the purview of the following clauses.

For the sake of good order, various features of the invention are set out in the following clauses:-
1. A continuous process of preparing a heat-vulcanizable filled silicone composition, comprising:
   mixing filler and high viscosity silicone polymer continuously in a first co-rotating intermeshing double screw extruder; and
   compounding a filler and silicone polymer mixture from said first extruder in a second extruder comprising a single shaft reciprocating extruder.
2. The process of clause 1, wherein said mixing of said filler and polymer is conducted in the absence of a premix.
3. The process of clause 1, wherein said filler is densified and mixed with said silicone polymer in said first extruder and said filler and silicone polymer mixture is compounded, treated and stripped of volatiles in said second extruder.
4 The process of clause 1, wherein said filler comprises fumed silica that is pretreated with a silanol treating agent prior to mixing in said first extruder.
5. The process of clause 1, wherein said filler comprises a raw, untreated fumed silica and treating agent is added to said first extruder with said silica.
6. The process of clause 1, additionally comprising mixing a processing fluid with said filler in said first extruder.
7. The process of clause 6, wherein said filler comprises silica and said processing fluid comprises an amount of HMDZ of about 0.1 parts to about 100 parts by weight to about 100 parts silica and an amount of water of about 0.1 to about 100 parts by weight to 100 parts silica.
8. The process of clause 6, wherein said filler comprises silica and said processing fluid comprises an amount of HMDZ of about 0.5 parts to about 50 parts by weight to about 100 parts silica and an amount of water of about 0.5 to about 20 parts by weight to 100 parts silica.
9. The process of clause 6, wherein said filler comprises silica and said processing fluid comprises an amount of HMDZ of about 1.0 parts to about 20 parts by weight to about 100 parts silica and an amount of water of about 1.0 to about 10 parts by weight to 100 parts silica.
10. The process of clause 1, wherein a ratio of L/D of the first extruder to L/D of the second extruder is about 0.37 to about 0.66.
11. The process of clause 1, wherein a ratio of L/D of the first extruder to L/D of the second extruder is about 0.48 to about 0.52.
12. The process of clause 1, wherein said filler is added for mixing in said first extruder and said polymer is added after the addition of said filler.
13. The process of clause 12, wherein said filler is added for mixing in said first extruder, a processing fluid is added after the addition of said filler and said polymer is added after the addition of said processing fluid.
14. The process of clause 12, wherein said filler is added for mixing in said first extruder, a processing fluid is added after the addition of said filler, a treating agent is added after the addition of said processing fluid and said polymer is added after the addition of said treating agent.
15. The process of clause 1, comprising heating said high viscosity silicone polymer to reduce the viscosity of said polymer prior to mixing in said first extruder.
16. The process of clause 1, comprising heating said high viscosity silicone polymer to at least 15°C to reduce the viscosity of said polymer prior to mixing in said first extruder.
17. The process of clause 1, additionally comprising:
   monitoring a continuous feed of said silicone polymer to said first extruder; and
   adjusting a rate of feed of filler or additive to said first extruder in accordance with said feed of silicone polymer.
18. The process of clause 1, comprising charging said filler and silicone polymer mixture via a side feed to said second extruder.
19. The process of clause 1, comprising feeding said filler and silicone polymer mixture from said first extruder to said second extruder by means of a transition apparatus.
20. The process of clause 1, comprising feeding said filler and silicone polymer mixture from said first extruder to said second extruder by means of a transition apparatus and adjusting said transition apparatus to overcome unloading pressure from said first extruder.
21. A continuous process of preparing a heat-vulcanizable filled silicone composition, comprising:
   forming a premix of filler and high viscosity silicone polymer;
   mixing said premix and additional high viscosity silicone polymer continuously in a co-rotating intermeshing double screw extruder; and
   compounding a filler and silicone polymer mixture from said co-rotating intermeshing double screw extruder in a second single shaft reciprocating extruder.
22. The process of clause 21, wherein said filler is a treated fumed silica.
23. The process of clause 21, wherein said filler is an untreated, raw fumed silica.
24. The process of clause 21, wherein said filler is silica and said processing fluid comprises an amount of HMDZ of about 0.1 parts to about 100 parts by weight to about 100 parts silica and an amount of water of about 0.1 to about 100 parts by weight to 100 parts silica.
25. The process of clause 21, wherein said filler is silica and said processing fluid comprises an amount of HMDZ of about 0.5 parts to about 50 parts by weight to about 100 parts silica and an amount of water of about 0.5 to about 20 parts by weight to 100 parts silica.
26. The process of clause 21, wherein said filler is silica and said processing fluid comprises an amount of HMDZ of about 1.0 parts to about 20 parts by weight to about 100 parts silica and an amount of water of about 1.0 to about 10 parts by weight to 100 parts silica.
27. The process of clause 21, wherein a ratio of L/D of the first extruder to L/D of the second extruder is about 0.37 to about 0.66.
28. The process of clause 21, wherein a ratio of L/D of the first extruder to L/D of the second extruder is about 0.48 to about 0.52.
29. The process of clause 21, wherein said filler is added for mixing in said first extruder and said polymer is added after the addition of said filler.
30. The process of clause 21, wherein said filler is added for mixing in said first extruder, a processing fluid is added after the addition of said filler and said polymer is added after the addition of said processing fluid.
31. The process of clause 21, wherein said filler is added for mixing in said first extruder, a processing fluid is added after the addition of said filler, a treating agent is added after the addition of said processing fluid and said polymer is added after the addition of said treating agent.
32. The process of clause 21, comprising heating said high viscosity silicone polymer to reduce the viscosity of said polymer prior to mixing in said first extruder.
33. The process of clause 21, comprising heating said high viscosity silicone polymer to at least 15°C to reduce the viscosity of said polymer prior to mixing in said first extruder.
34. The process of clause 21, additionally comprising:
   monitoring a continuous feed of said silicone polymer to said first extruder; and
   adjusting a rate of feed of filler or additive to said first extruder in accordance with said feed of silicone polymer.
35. The process of clause 21, comprising charging said filler and silicone polymer mixture via a side feed to said second extruder.
36. The process of clause 21, comprising feeding said filler and silicone polymer mixture from said first extruder to said second extruder by means of a transition apparatus.
37. A continuous process of preparing a heat-vulcanizable filled silicone composition, comprising:
   mixing filler and high viscosity silicone polymer continuously in a first counter-rotating, intermeshing double screw extruder; and
   compounding a filler and silicone polymer mixture from said first extruder in a second extruder comprising a counter-rotating; non-intermeshing double screw extruder.
38. A continuous process of preparing a heat-vulcanizable filled silicone composition, comprising:
   mixing filler and high viscosity silicone polymer continuously in a first single screw extruder; and
   compounding a filler and silicone polymer mixture from said first extruder in a second extruder comprising a counter-rotating; non-intermeshing double screw extruder.
39. A continuous process of preparing a heat-vulcanizable filled silicone composition, comprising:
   mixing filler and high viscosity silicone polymer continuously in a first single screw extruder; and
   compounding a filler and silicone polymer mixture from said first extruder in a second extruder comprising a co-rotating, intermeshing double screw extruder.
40. A continuous process of preparing a heat-vulcanizable filled silicone composition, comprising:
   mixing filler and high viscosity silicone polymer continuously in a first co-rotating intermeshing double screw extruder; and
   compounding a filler and silicone polymer mixture from said first extruder in a second extruder comprising a second co-rotating, intermeshing double screw extruder, wherein said first extruder has a greater OD/ID ratio than said second extruder.
41. A compounding system, comprising a first co-rotating, intermeshing double screw extruder and a second single screw extruder.
42. The compounding system of clause 41, wherein said second extruder comprises a single screw reciprocating extruder.
43. The compounding system of clause 41, wherein said second extruder comprises a single screw reciprocating extruder having an L/D ratio of 50 or less.
44. The compounding system of clause 41, wherein said first extruder is connected to feed via a side feed to said second extruder.
45. The compounding system of clause 41, additionally comprising a transition apparatus to feed material from said first extruder to said second extruder.
46. The compounding system of clause 41, additionally comprising a transition apparatus comprising a single screw extruder to feed material from said first extruder to said second extruder.
47. The compounding system of clause 41, additionally comprising a transition apparatus comprising a single screw extruder with an L/D ratio of about 3.5 to feed material from said first extruder to said second extruder.
48. The compounding system of clause 41, additionally comprising a transition apparatus comprising a single screw extruder with double flights to facilitate discharge of material from said first extruder to said second extruder.
49. The compounding system of clause 41, additionally comprising a transition apparatus comprising a single screw extruder to overcome unloading pressure from said first extruder.
50. The compounding system of clause 41, wherein said second extruder includes a pressurized zone to retain treating agent volatiles.
51. The compounding system of clause 41, wherein said second extruder includes a pressurized zone to retain volatiles, said zone formed by isolating screw elements situated at both the beginning and at the section end.
52. A compounding system, comprising a first counter-rotating, intermeshing double screw extruder; and a second counter-rotating; non-intermeshing double screw extruder.
53. A compounding system, comprising a first single screw extruder; and a second co-rotating, intermeshing double screw extruder for further processing.
54. A compounding system, comprising, a first co-rotating, intermeshing double screw extruder; and a second single screw reciprocating extruder for further processing.
55. A compounding system, comprising, a first co-rotating intermeshing double screw extruder; a second co-rotating, intermeshing double screw extruder, wherein said first extruder has a greater OD/ID ratio than said second extruder.

## Claims

1. A continuous process of preparing a heat-vulcanizable filled silicone composition, comprising:
mixing filler and high viscosity silicone polymer continuously in a first co-rotating intermeshing double screw extruder; and
compounding a filler and silicone polymer mixture from said first extruder in a second extruder comprising a single shaft reciprocating extruder.

2. A continuous process of preparing a heat-vulcanizable filled silicone composition, comprising:
forming a premix of filler and high viscosity silicone polymer;
mixing said premix and additional high viscosity silicone polymer continuously in a co-rotating intermeshing double screw extruder; and
compounding a filler and silicone polymer mixture from said co-rotating intermeshing double screw extruder in a second single shaft reciprocating extruder.

3. A continuous process of preparing a heat-vulcanizable filled silicone composition, comprising:
mixing filler and high viscosity silicone polymer continuously in a first counter-rotating, intermeshing double screw extruder; and
compounding a filler and silicone polymer mixture from said first extruder in a second extruder comprising a counter-rotating; non-intermeshing double screw extruder.

4. A continuous process of preparing a heat-vulcanizable filled silicone composition, comprising:
mixing filler and high viscosity silicone polymer continuously in a first single screw extruder; and
compounding a filler and silicone polymer mixture from said first extruder in a second extruder comprising a counter-rotating; non-intermeshing double screw extruder.

5. A continuous process of preparing a heat-vulcanizable filled silicone composition, comprising:
mixing filler and high viscosity silicone polymer continuously in a first single screw extruder; and
compounding a filler and silicone polymer mixture from said first extruder in a second extruder comprising a co-rotating, intermeshing double screw extruder.

6. A continuous process of preparing a heat-vulcanizable filled silicone composition, comprising:
mixing filler and high viscosity silicone polymer continuously in a first co-rotating intermeshing double screw extruder; and
compounding a filler and silicone polymer mixture from said first extruder in a second extruder comprising a second co-rotating, intermeshing double screw extruder, wherein said first extruder has a greater OD/ID ratio than said second extruder.

7. A compounding system, comprising a first co-rotating, intermeshing double screw extruder and a second single screw extruder.

8. A compounding system, comprising a first counter-rotating, intermeshing double screw extruder; and a second counter-rotating; non-intermeshing double screw extruder.

9. A compounding system, comprising a first single screw extruder; and a second co-rotating, intermeshing double screw extruder for further processing.

10. A compounding system, comprising, a first co-rotating intermeshing double screw extruder; a second co-rotating, intermeshing double screw extruder, wherein said first extruder has a greater OD/ID ratio than said second extruder.
